# EUROPÄISCHE PATENTSCHRIFT

(11) **EP 3 527 766 B1**
(45) Veröffentlichungstag und Bekanntmachung des Hinweises auf die Patenterteilung: **29.03.2023**
(21) Anmeldenummer: 18157282.7
(22) Anmeldetag: 16.02.2018
(51) Int. Cl.: E05F 15/63

(54) **EINLERNVERFAHREN FÜR EINEN TÜRSENSOR**
LEARNING METHOD FOR A DOOR SENSOR
PROCÉDÉ DE CONFIGURATIOND'UN CAPTEUR DE PORTE

(43) Veröffentlichungstag der Anmeldung: 21.08.2019
(73) Patentinhaber: Cedes AG, 7302 Landquart (CH)
(72) Erfinder: WALSER, Simon, 7203 Trimmis (CH)
(74) Vertreter: Otten, Roth, Dobler & Partner mbB Patentanwälte

(56) Entgegenhaltungen:
- EP-B1- 2 453 260
- US-B1- 6 873 931

## Beschreibung

Die Erfindung betrifft ein Einlernverfahren für einen auf dem Türblatt mitfahrenden Türsensor zum Einlernen von Umgebungsparametern.

Aus dem Stand der Technik sind Türsensoren bekannt, die auf dem Türblatt einer Schwenktüre montiert sind. Die Patente EP 2 453 254 A1, EP 2 453 260 B1, EP 2 698 649 B1, EP 2 453 252 B1 und EP 2 667 218 B1 des Anmelders beschreiben einen gattungsgemässen Sensor ohne Einlernverfahren.

Es ist Aufgabe der Erfindung, einen verbesserten Türsensor mit Einlernverfahren bereit zu stellen.

Diese Aufgabe wird, ausgehend von einem Türsensor der eingangs genannten Art, durch einen Verfahren nach Anspruch 1 gelöst. Vorteilhafte Ausgestaltungen sind in den weiteren abhängigen Ansprüchen angegeben.

Das erfindungsgemäße Verfahren ist ein Verfahren zum Einlernen von Parametern für einen Türsensor zur Überwachung eines Überwachungsfeldes vor dem Türblatt einer Türe zur Montage auf dem Türblatt einer Schwenk- oder Drehtüre wobei folgende Verfahrensschritte ausgeführt werden:
- Verwendung eines mindestens 2-achsigen Drehwinkelgebers welcher in Bezug auf das Türblatt mindestens 1-fach geneigt ist,
- Öffnen des Türblattes der geschlossenen Türe,
- Detektion der Drehung beider Achsen des Drehwinkelgebers beim Öffnen,
- Ermittlung der Drehrichtung beider Achsen aufgrund deren Drehung,
- Ermittlung der Türseite (Türinnenseite oder Türaussenseite) an der der Türsensor am Türblatt montiert ist aufgrund der Drehrichtung der beiden Achsen,
- Speicherung der Türseite (Türinnenseite oder Türaussenseite) in einem Speicher, insbesondere einem Speicher des Türsensors.

Das Verfahren kann den Vorteil ausbilden, dass der Türsensor für seine Einbausituation bezüglich der Unterscheidung der verwendeten Türseite weder vorkonfiguriert, noch bei der Montage konfiguriert werden muss, sodass sowohl die Typenvarianz reduziert als auch die Montagezeit und die Fehleranfälligkeit reduziert werden kann.

Vorzugsweise sind weitere Verfahrensschritte die Ermittlung der Drehrichtung des Türblatts (links- oder rechtsdrehend) aufgrund der Drehrichtung mindestens einer Achse des Drehwinkelgebers und die Speicherung der Drehrichtung in einem Speicher, insbesondere in einem Speicher des Türsensors.

Dies kann den Vorteil ausbilden, dass der Türsensor für seine Einbausituation bezüglich der Unterscheidung der vorgegebenen Drehrichtung weder vorkonfiguriert, noch bei der Montage konfiguriert werden muss, sodass sowohl die Typenvarianz reduziert als auch die Montagezeit und die Fehleranfälligkeit reduziert werden kann.

Vorzugsweise sind weitere Verfahrensschritte das Öffnen der Türe bis zum Maximum, insbesondere mit anschliessendem Reversieren, insbesondere mit anschliessendem Schliessen der Türe, Detektion des maximalen Drehwinkels aufgrund des Stillstandes oder der Bewegungsumkehr aufgrund der Reversion der Drehung aufgrund des Öffnens bis zum Maximum, und die Speicherung des maximalen Drehwinkels in einem Speicher, insbesondere in einem Speicher des Türsensors.

Dies kann den Vorteil ausbilden, dass der Türsensor für seine Einbausituation bezüglich des maximalen Drehwinkels des Türblatts, also des maximalen Öffnungswinkels der Türe weder vorkonfiguriert, noch bei der Montage konfiguriert werden muss, sodass sowohl die Typenvarianz reduziert als auch die Montagezeit und die Fehleranfälligkeit reduziert werden kann.

Vorzugsweise ist ein weiterer Verfahrensschritt die Verwendung eines mindestens 2-achsigen Drehwinkelgebers welcher in Bezug auf das Türblatt 2-fach geneigt ist. Dies kann den Vorteil ausbilden, dass der Drehwinkelgeber innerhalb des Türsensors parallel zu den Hauptachsen des Türsensors angeordnet werden kann, womit der Türsensor einfacher und preiswerter zu produzieren ist.

Vorzugsweise ist ein weiterer Verfahrensschritt die Verwendung eines 3-achsigen Drehwinkelgebers. Dies kann den Vorteil ausbilden, dass ein handelsüblicher und preiswerter Drehwinkelgeber verwendet werden kann.

Vorzugsweise ist ein weiterer Verfahrensschritt die Verwendung eines Gyrosensors als Drehwinkelgeber. Dies kann den Vorteil ausbilden, dass ein sehr kleines Bauteil verwendet werden kann.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ein Ausführungsbeispiel der Erfindung ist in den Zeichnungen dargestellt. Alle Zeichnungen betreffen den selben erfindungsgemässen Türsensor in gleicher Anordnung am Türblatt, falls nicht ausdrücklich anders dargelegt. Gleiche Bezugszeichen in den einzelnen Figuren bezeichnen dabei einander entsprechende Elemente. Es zeigen:
- Fig. 1: Türe mit Türsensor in 3D Ansicht
- Fig. 2: Türe mit Türsensor in Draufsicht
- Fig. 3: Türsensor mit Gehäuse
- Fig. 4: Montageplatte des Türsensors
- Fig. 5: Türsensor auf Montageplatte
- Fig. 6: Türsensor auf Montageplatte
- Fig. 7: Ausrichtung des Türsensors
- Fig. 8: Montagesituationen
- Fig. 9: Überwachungsfeld einer geschlossenen Türe
- Fig. 10: Überwachungsfeld einer geöffneten Türe
- Fig. 11: Hinteres Überwachungsfeld bei geschlossener Türe
- Fig. 12: Hinteres Überwachungsfeld bei leicht geöffneter Türe
- Fig. 13: Hinteres Überwachungsfeld bei weiter geöffneter Türe

### Detaillierte Beschreibung der Zeichnungen:

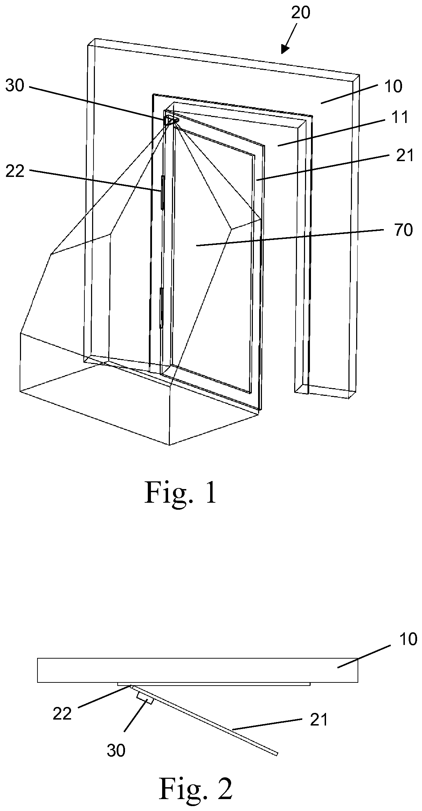

Fig. 1 zeigt eine Türe 20 mit dem Türsensor 30 in 3D Ansicht.

Die Türe 20 weist ein Türblatt 21 auf welches mit Türscharnieren 22 drehbar an der Wand 10 befestigt ist. Das Türblatt kann geschlossen werden oder in eine Richtung, hier in Richtung des Betrachters, geöffnet werden, sodass das Türblatt die Türöffnung 11 frei gibt.

Das Türscharnier 20 legt die Drehachse des Türblatts fest. Die Drehachse ist die Achse um die das Türblatt um einen bestimmten Drehwinkel bewegt werden kann. Bei geschlossener Türe wird der Drehwinkel Null angenommen. Bei maximal geöffneter Türe ist die Türe im maximalen Drehwinkel geöffnet.

Die Türe 20 ist eine Schwenktüre, die in nur eine Richtung zu öffnen ist.

Die Türe und das Türblatt weisen zwei Türseiten auf. Die erste Türseite ist die Türinnenseite, das ist die Seite, in deren Richtung die Tür geöffnet wird. Die zweite Türseite ist die Türaussenseite, das ist die Seite in deren Richtung die Türe geschlossen wird.

Eine Türe kann eine von zwei Drehrichtungen aufweisen. Die Drehrichtung einer Türe ist die Seite an welcher die Drehachse der Türe auf der Türinnenseite ist. Die Drehrichtung kann rechtsdrehend oder linksdrehend sein. Die Türe 20 hat die Drehachse auf der linken Seite und daher die linksdrehend.

Auf dem Türblatt 21 ist auf der Türinnenseite oben auf der Seite der Drehachse auf dem Türblatt mit sehr geringem Abstand (kleiner 20 cm oder kleiner 10% der Breite bzw. Höhe des Türblatts) zum oberen und seitlichen Abschluss des Türblatts der Türsensor 30 montiert. Der Türsensor 30 überwacht das dreidimensionale Überwachungsfeld 70. Der so montierte Türsensor wird als auf dem Türblatt mitfahrend bezeichnet. Ebenso ist das Überwachungsfeld 70 mit dem Türblatt mitfahrend. Das heisst, das Überwachungsfeld kann mindestens teilweise konstant zum Türblatt sein. Die Figur zeigt eine realistische Darstellung der möglichen Ausdehnung des Überwachungsfeldes.

Die Türe 20 ist eine über eine Türsteuerung motorisch angetriebene Türe und der Türsensor ist dazu ausgelegt, in Abhängigkeit von seiner Detektion im Überwachungsfeld Signale an die Türsteuerung zu übergeben. Dies kann ein Sicherheitssignal zum Stopp der Türe sein, etwa falls eine Person im Überwachungsfeld im Bewegungsfeld des Türblatts detektiert wird. Dies kann auch ein Öffnungssignal zum Öffnen der Türe sein, etwa falls eine Person im Überwachungsfeld detektiert wird, die auf die Türe zu geht.

Fig. 2 zeigt die Türe der Fig. 1 in Draufsicht.

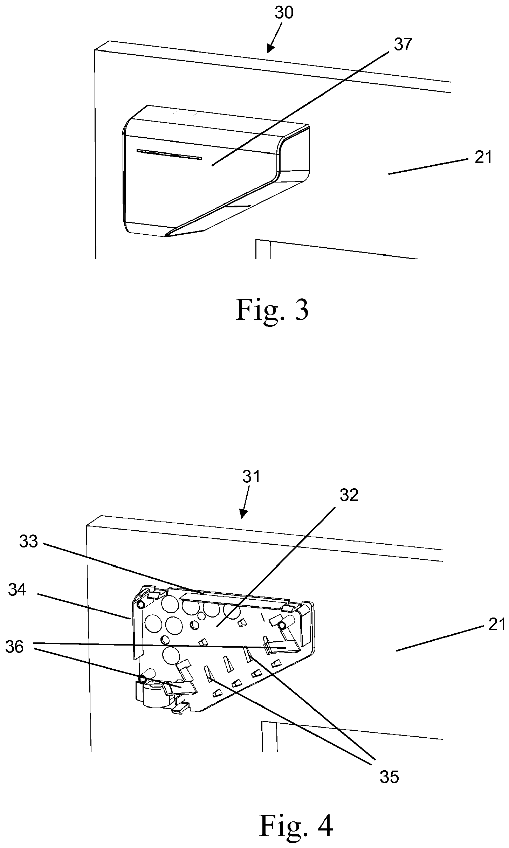

Fig. 3 zeigt den Türsensor 30 mit Gehäuse 37 am Türblatt 21 als Detail aus Fig. 1.

Fig. 4 zeigt eine Montageplatte 31 des Türsensors als Detail aus Fig. 3. Die Montageplatte 31 weist eine Ebene 32 zur flächenparallelen Montage am Türblatt 21 auf, eine waagrechte Kante 33 zur Ausrichtung parallel zur Oberkante des Türblatts und eine senkrechte Kante 34 zur Ausrichtung parallel zur Seitenkante des Türblatts. Die Montageplatte weist Stützelemente 35 auf zur definierten Winkelausrichtung des Türsensors in Bezug auf die Ebene des Türblatts. Die Montageplatte weist Halteelemente 36 auf, zur Fixierung und definierten Winkelausrichtung des Türsensors in Bezug auf die Waagrechte und Oberkante des Türblatts.

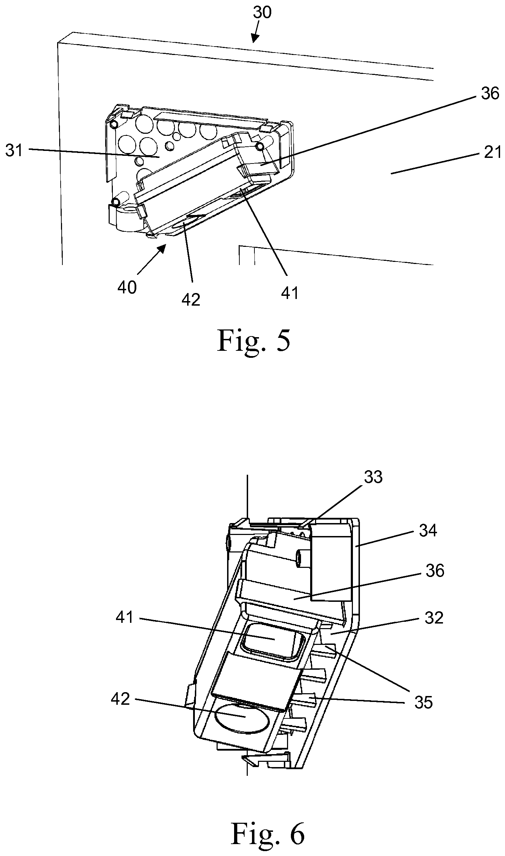

Fig. 5 zeigt den Türsensor 30 mit der Montageplatte 31 auf dem Türblatt 21 ebenfalls als Detail aus Fig. 3. Der Türsensor weist einen 3D Bildsensor 40 auf welcher einen Sender 41 und einen Empfänger 42 aufweist. Der Sender sendet mit 20 MHz modulierte IR Strahlung in den Überwachungsbereich. Der Empfänger ist ein Pixel-Matrixsensor welcher die aus dem Überwachungsbereich reflektierte Strahlung des Senders als Bild empfängt und dazu ausgebildet ist, für jeden seiner Pixel die Phasenverschiebung der Modulation der empfangenen Strahlung im Vergleich zur ausgesandten Strahlung zu detektieren. Aufgrund der Phasenverschiebung ermittelt der Empfänger für jedes seiner Pixel den Abstand der auf dieses Pixel reflektierenden Oberfläche im Überwachungsraum und generiert so ein 3D Bild. Andere Türsensoren benutzen statt der Phasenverschiebung die Flugzeit der ausgesandten und reflektieren Strahlung was im Endeffekt ähnlich ist. Diese Türsensoren werden auch TOF (Time of Flight) Sensoren genannt. Die Pixel des verwendeten Empfängers werden auch Demodulationspixel genannt.

Fig. 6 zeigt den Türsensor 30 ebenfalls als Detail aus Figur 3. Die Stützelemente 35 fixieren in Zusammenhang mit der Ebene 32 der Montageplatte die Blickrichtung und Hauptachsen des Türsensors in Bezug auf die Ebene des Türblatts. Die Halteelemente 36 fixieren in Zusammenhang mit der waagrechten Kante 33 und der senkrechten Kante 34 der Montageplatte die Blickrichtung und Hauptachsen des Türsensors in Bezug auf die Waagrechen und die Oberkante des Türblatts. Die Blickrichtung und Hauptachse des Türsensors wird durch die optischen Achsen von Sender 41 und Empfänger 42 definiert.

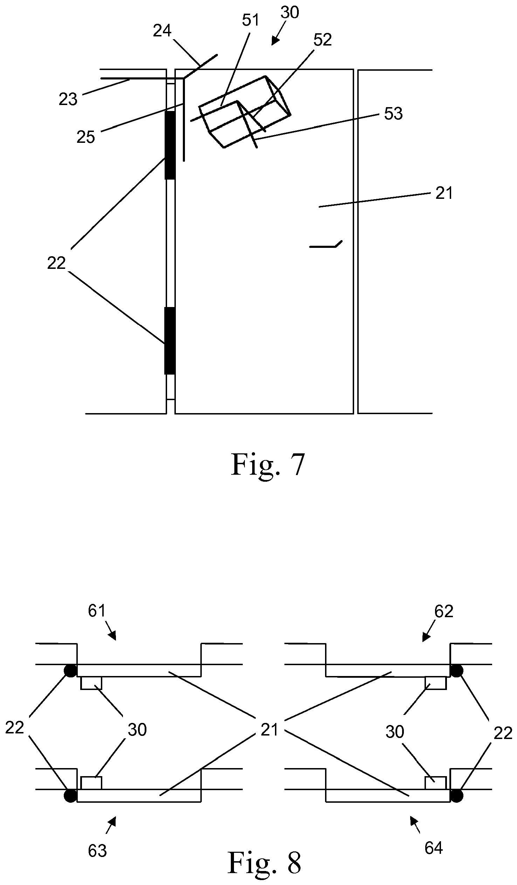

Fig. 7 zeigt die Ausrichtung des Türsensors 30 in Bezug auf das Türblatt 21 als Detail der vorhergehenden Figuren.

Das Koordinatensystem des Türblatts hat seinen Nullpunkt in der Drehachse am oberen Ende des Türblatts. Die X-Achse 23 des Türblatts verläuft waagrecht in Richtung des Scharniers 22, die Y-Achse 24 des Türblatts verläuft lotrecht zur Ebene des Türblatts zur Türaussenseite, also vom Betrachter weg und die Z-Achse 25 des Türblatts verläuft senkrecht nach unten.

Das Koordinatensystem des Türsensors hat seinen Nullpunkt im Türsensor. Die X-Achse 51 des Türsensors ist im Vergleich zur X-Achse des Türblatts um 30° um die Y-Achse des Türblatts nach unten gedreht. Die Z-Achse 53 des Türsensors ist im Vergleich zur Ebene des Türblatts um 15° um die X-Achse des Türsensors nach vorn zum Betrachter hingedreht. Die Y-Achse 52 des Türsensors ergibt sich entsprechend und zeigt vom Betrachter weg. Die Hauptblickrichtung des Türsensors geht also schräg nach unten und ist um 30° aus der Senkrechten zur Aussenkante des Türblatts und um 15° aus der Ebene des Türblatts nach vorn geschwenkt.

Der Türsensor weist einen 3-Achsen Gyrosensor als Drehwinkelgeber auf und ist in den Figuren nicht dargestellt. Der Gyrosensor ist gemäss dem Koordinatensystem des Türsensors orientiert.

Fig. 8 zeigt die vier Montagesituationen des Türsensors 30 an einem Türblatt 30. Die Montagesituation 61 entspricht den vorhergehenden Figuren. Die Montagesituationen 62, 63 und 64 entsprechen nicht den vorhergehenden Figuren.

Die Montagesituationen 61 und 62 zeigen den Türsensor 30 auf der Türinnenseite des Türblatts 21, während die Montagesituationen 63 und 64 den Türsensor 30 auf der Türaussenseite des Türblatts 21 zeigen. Die Montagesituationen 61 und 63 zeigen den Türsensor 30 an einer linksdrehenden Türe, da die Scharniere 22 auf der linken Seite der Türinnenseite angeordnet sind. Die Montagesituationen 62 und 64 zeigen den Türsensor 30 an einer rechtsdrehenden Türe, da die Scharniere 22 auf der rechten Seite der Türinnenseite angeordnet sind.

Es gibt also vier unterschiedliche Montagesituationen die durch die Kombination aus den beiden möglichen Türseiten (Türinnenseite oder Türaussenseite) und den beiden möglichen Drehrichtungen des Türblatts (rechtsdrehend oder linksdrehend) gegeben sind. Dies sind im Einzelnen:

| | | |
|---|---|---|
| Montagesituation 61: | auf Türaussenseite | einer linksdrehende Türe |
| Montagesituation 62: | auf Türaussenseite | einer rechtsdrehenden Türe |
| Montagesituation 63: | auf Türinnenseite | einer linksdrehende Türe |
| Montagesituation 64: | auf Türinnenseite | einer rechtsdrehenden Türe |

In einem Lernmodus detektiert der Drehwinkelsensor beim Öffnen der Türe eine Drehung um alle 3 Achsen. Daraus ermittelt der Türsensor die Drehrichtung um jede seiner Achsen. Aus der Drehrichtung der 3 Achsen ermittelt der Türsensor nun eindeutig die zutreffende Montagesituation anhand der folgenden Tabelle. Eine positive Drehrichtung im mathematischen Sinn ist hier mit "+" angegeben.

| Drehrichtung X-Achse | Drehrichtung Y-Achse | Drehrichtung Z-Achse | Montagesituation |
|---|---|---|---|
| + | + | + | 61 |
| - | + | - | 62 |
| + | - | + | 63 |
| - | - | - | 64 |

Aus der Tabelle ist ersichtlich, dass die Detektion von nur 2 Achsen ausreichen würde, wenn dies die Achsen X und Y oder Y und Z sind, da auch allein mit diesen Achsen eine eindeutige Zuordnung der Montagesituation möglich ist. Insofern ist es ausreichend, für den Türsensor einen 2-Achsen Drehwinkelgeber zu verwenden.

Ebenso soll angemerkt werden, dass es ausreichend ist, das Koordinatensystem des Drehwinkelgebers lediglich um eine Achse gegenüber dem Türblatt zu verdrehen. Es ist also ausreichend die Z-Achse 53 des Drehwinkelgebers im Vergleich zur Ebene des Türblatts um 15° um die X-Achse des Türsensors nach vorn zum Betrachter hin zu verdrehen. Die X-Achse des Drehwinkelgebers kann also parallel zur X-Achse des Türblatts verbleiben.

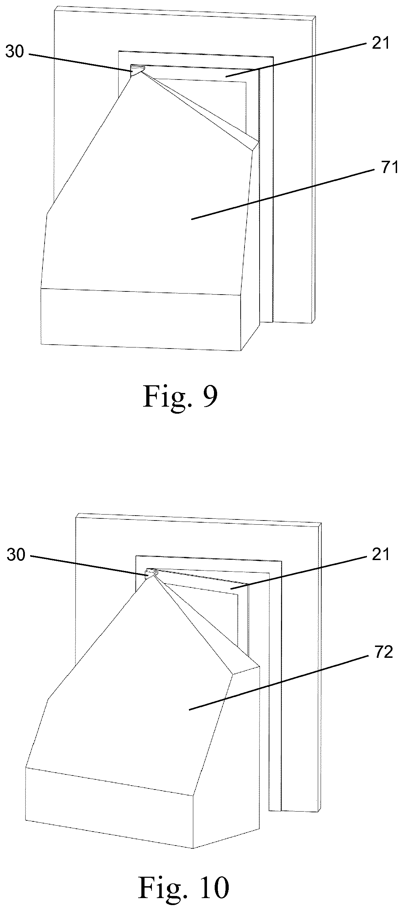

Fig. 9 zeigt das Überwachungsfeld 71 des Türsensors 30 mit geschlossenem Türblatt 21. Das Überwachungsfeld 71 endet an der Türaussenkante.

Fig. 10 zeigt das vergrösserte Überwachungsfeld 72 des Türsensors 30 mit leicht geöffnetem Türblatt 21 der gleichen Türe der Fig. 9. Das Überwachungsfeld 72 reicht nun über die Türaussenkante hinaus. Der Türsensor 30 der Fig. 9 und der Fig. 10 ist also dazu ausgebildet, das Überwachungsfeld in Abhängigkeit des Drehwinkels zu verändern und hier mit zunehmendem Drehwinkel zu vergrössern.

Der Türsensor kann dazu ausgelegt sein, dass die maximale Vergrösserung etwa bei 45° Drehwinkel des Türblatts erreicht ist, sodass das Überwachungsfeld bei geschlossener oder um 90° oder vollständig geöffnetem Türblatt wieder zum Ende der Türaussenkante reduziert ist.

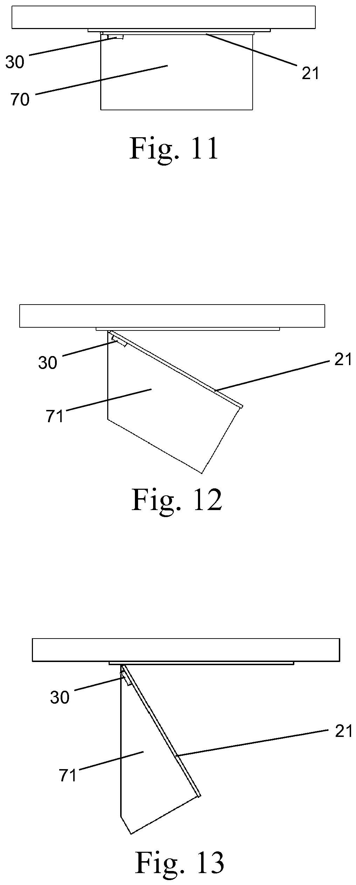

Fig. 11, Fig. 12 und Fig. 13 zeigten jeweils eine Türe mit einem Türblatt 21 mit einem Türsensor 30 und dem Überwachungsfeld 70, 71 bei verschiedenen Drehwinkeln des Türblatts in Draufsicht.

Der Drehwinkel für das Türblatt der Türe nach Fig. 11, Fig. 12 und Fig. 13 ist auf eine radiale Begrenzungslinie bei 90° begrenzt, etwa durch einen Bodenanschlag, durch eine senkrecht angrenzende Wand, durch eine Begrenzung der Türmechanik oder durch eine Begrenzung durch die Türsteuerung des motorischen Türantriebs. Das Türblatt 11 der Fig. 11 ist geschlossen und das Überwachungsfeld 70 erstreckt sich als Rechteck an das Türblatt angrenzend in der Breite des Türblatts senkrecht in den Raum vor dem Türblatt.

Das Türblatt 11 der Fig. 12 ist um 30° und der Fig. 13 um 60° geöffnet und das Überwachungsfeld 71 erstreckt sich als Rechteck an das Türblatt angrenzend in der Breite des Türblatts senkrecht in den Raum vor dem Türblatt, wobei das Überwachungsfeld 71 auf der Seite des Scharniers der Türe so vermindert ist, dass das Überwachungsfeld nicht über die radiale Begrenzungslinie der maximalen Bewegung des Türblatts hinausreicht.

Der Türsensor ist also dazu ausgelegt, die Ausdehnung des Überwachungsfeldes in Abhängigkeit des Drehwinkels des Türblatts so zu ändern, dass das Überwachungsfeld von der Ebene des Türblatts bei maximalem Öffnungswinkel stets abgeschnitten ist und also nicht über diese Ebene hinausreicht. Dadurch kann etwa auch ein Ausblenden einer Wand erreicht werden, damit die Wand bei der Annäherung des Türsensors nicht als Hindernis-Objekt detektiert wird.

### Bezugszeichenliste:

- 10: Wand
- 11: Türöffnung

- 20: Tür
- 21: Türblatt
- 22: Türscharnier
- 23: X-Achse des Türblatts
- 24: Y-Achse des Türblatts
- 25: Z-Achse des Türblatts

- 30: Türsensor
- 31: Montageplatte
- 32: Ebene der Montageplatte
- 33: Waagrechte Kante der Montageplatte
- 34: Senkrechte Kante der Montageplatte
- 35: Stützelemente
- 36: Halteelemente
- 37: Gehäuse

- 40: 3D Bildsensor
- 41: Sender
- 42: Empfänger

- 50: 3-Achsen Gyrosensor
- 51: X-Achse des Gyrosensors
- 52: Y-Achse des Gyrosensors
- 53: Z-Achse des Gyrosensors

- 61: 1. Fall der Anordnung
- 62: 2. Fall der Anordnung
- 63: 3. Fall der Anordnung
- 64: 4. Fall der Anordnung

- 70: Überwachungsfeld
- 71: reduziertes Überwachungsfeld
- 72: vergrössertes Überwachungsfeld

## Patentansprüche

1. Verfahren zum Einlernen von Parametern
- für einen Türsensor (30)
- zur Überwachung eines Überwachungsfeldes (70, 71, 72) vor dem Türblatt (21) einer Türe (20)
- zur Montage auf dem Türblatt (21) einer Schwenk- oder Drehtüre (20),
wobei das Verfahren die folgenden Verfahrensschritte umfasst:
- Verwendung eines mindestens 2-achsigen Drehwinkelgebers welcher in Bezug auf das Türblatt mindestens 1-fach geneigt ist,
- Öffnen des Türblattes der geschlossenen Türe,
- Detektion der Drehung beider Achsen des Drehwinkelgebers beim Öffnen,
- Ermittlung der Drehrichtung beider Achsen aufgrund deren Drehung,
- Ermittlung der Türseite (Türinnenseite oder Türaussenseite) an der der Türsensor am Türblatt montiert ist aufgrund der Drehrichtung der beiden Achsen,
- Speicherung der Türseite (innen oder aussen) in einem Speicher, insbesondere einem Speicher des Türsensors, sodass der Türsensor (30) für seine Einbausituation bezüglich der Unterscheidung der verwendeten Türseite weder vorkonfiguriert noch bei der Montage konfiguriert werden muss.

2. Verfahren nach Anspruch 1, **gekennzeichnet durch** weitere Verfahrensschritte:
- Ermittlung der Drehrichtung des Türblatts (links- oder rechtsdrehend) aufgrund der Drehrichtung mindestens einer Achse des Drehwinkelgebers,
- Speicherung der Drehrichtung in einem Speicher, insbesondere in einem Speicher des Türsensors, sodass der Türsensor (30) für seine Einbausituation bezüglich der Drehrichtung weder vorkonfiguriert noch bei der Montage konfiguriert werden muss.

3. Verfahren nach einem der vorhergehenden Ansprüche, **gekennzeichnet durch** die weiteren Verfahrensschritte:
- Öffnen der Türe bis zum Maximum, insbesondere mit anschliessendem Reversieren, insbesondere mit anschliessendem Schliessen der Türe,
- Detektion des maximalen Drehwinkels aufgrund des Stillstandes oder der Bewegungsumkehr aufgrund der Reversion der Drehung aufgrund des Öffnens bis zum Maximum,
- Speicherung des maximalen Drehwinkels in einem Speicher, insbesondere in einem Speicher des Türsensors, sodass der Türsensor (30) für seine Einbausituation bezüglich der Unterscheidung des maximalen Drehwinkels, also des maximalen Öffnungswinkels der Türe, weder vorkonfiguriert noch bei der Montage konfiguriert werden muss.

4. Verfahren nach einem der vorhergehenden Ansprüche, **gekennzeichnet durch** weitere Verfahrensschritte:
- Verwendung eines mindestens 2-achsigen Drehwinkelgebers welcher in Bezug auf das Türblatt 2-fach geneigt ist.

5. Verfahren nach einem der vorhergehenden Ansprüche, **gekennzeichnet durch** weitere Verfahrensschritte:
- Verwendung eines 3-achsigen Drehwinkelgebers.

6. Verfahren nach einem der vorhergehenden Ansprüche, **gekennzeichnet dadurch, dass**
- Verwendung eines Gyrosensors als Drehwinkelgeber.

## Claims

1. Method for teaching parameters
- for a door sensor (30)
- for monitoring a monitoring field (70, 71, 72) in front of the door leaf (21) of a door (20)
- for installation on the door leaf (21) of a swing or revolving door (20),
the method comprising the following method steps:
- using an at least 2-axis rotation angle encoder having at least 1-axis inclination in relation to the door leaf,
- opening the door leaf of the closed door,
- detecting the rotation of the two axes of the rotation angle encoder during opening,
- ascertaining the direction of rotation of the two axes on the basis of the rotation thereof,
- ascertaining the side of the door (inside of the door or outside of the door) on which the door sensor is installed on the door leaf on the basis of the direction of rotation of the two axes,
- storing the side of the door (inside or outside) in a memory, in particular a memory of the door sensor, with the result that the door sensor (30) need be neither preconfigured, nor configured during installation, for its installation situation in regard to distinguishing the side of the door that is used.

2. Method according to Claim 1, **characterized by** further method steps of:
- ascertaining the direction of rotation of the door leaf (rotating left or right) on the basis of the direction of rotation of at least one axis of the rotation angle encoder,
- storing the direction of rotation in a memory, in particular in a memory of the door sensor, with the result that the door sensor (30) need be neither preconfigured, nor configured during installation, for its installation situation in regard to the direction of rotation.

3. Method according to either of the preceding claims, **characterized by** the further method steps of:
- opening the door to the maximum, in particular with subsequent reversing, in particular with subsequent closing of the door,
- detecting the maximum rotation angle on the basis of the standstill or the reversal of movement on the basis of the reversion of the rotation on the basis of the opening to the maximum,
- storing the maximum rotation angle in a memory, in particular in a memory of the door sensor, with the result that the door sensor (30) need be neither preconfigured, nor configured during installation, for its installation situation in regard to distinguishing the maximum rotation angle, that is to say the maximum opening angle, of the door.

4. Method according to one of the preceding claims, **characterized by** further method steps of:
- using an at least 2-axis rotation angle encoder having 2-axis inclination in relation to the door leaf.

5. Method according to one of the preceding claims, **characterized by** further method steps of:
- using a 3-axis rotation angle encoder.

6. Method according to one of the preceding claims, **characterized in that**
- using a gyro sensor as rotation angle encoder.

## Revendications

1. Procédé d'apprentissage de paramètres
- pour un capteur de porte (30)
- destiné à la surveillance d'un champ de surveillance (70, 71, 72) devant le vantail (21) d'une porte (20)
- destiné à être monté sur le vantail (21) d'une porte pivotante ou d'une porte tournante (20), dans lequel le procédé comprend les étapes de procédé suivantes
- utilisation d'un capteur d'angle de rotation à au moins 2 axes qui est incliné au moins 1 fois par rapport au vantail,
- ouverture du vantail de la porte fermée,
- détection de la rotation des deux axes du capteur d'angle de rotation lors de l'ouverture,
- détermination du sens de rotation des deux axes sur la base de leur rotation,
- détermination du côté de la porte (côté intérieur de la porte ou côté extérieur de la porte) sur lequel le capteur de porte est monté sur le vantail, sur la base du sens de rotation des deux axes,
- stockage du côté de la porte (intérieur ou extérieur) dans une mémoire, notamment une mémoire du capteur de porte, de manière à ce qu'il ne soit pas nécessaire de préconfigurer le capteur de porte (30) en ce qui concerne sa situation de montage par rapport à la distinction du côté de la porte utilisé, ni de le configurer lors du montage.

2. Procédé selon la revendication 1, **caractérisé par** les autres étapes de procédé suivantes :
- détermination du sens de rotation du vantail (rotation à gauche ou à droite) sur la base du sens de rotation d'au moins un axe du capteur d'angle de rotation,
- stockage du sens de rotation dans une mémoire, notamment dans une mémoire du capteur de porte, de manière à ce qu'il ne soit pas nécessaire de préconfigurer le capteur de porte (30) en ce qui concerne sa situation de montage par rapport au sens de rotation, ni de le configurer lors du montage.

3. Procédé selon l'une quelconque des revendications précédentes, **caractérisé par** les autres étapes de procédé suivantes :
- ouverture de la porte jusqu'à son maximum, notamment suivie d'un changement de sens, en particulier suivie d'une fermeture de la porte,
- détection de l'angle de rotation maximum par immobilisation ou d'une inversion du mouvement due à un changement de sens de la rotation provoqué par l'ouverture jusqu'au maximum,
- stockage de l'angle de rotation maximum dans une mémoire, notamment dans une mémoire du capteur de porte, de manière à ce qu'il ne soit pas nécessaire de préconfigurer le capteur de porte (30) en ce qui concerne sa situation de montage par rapport à la distinction l'angle de rotation maximum, et donc de l'angle d'ouverture maximum de la porte, ni de le configurer lors du montage.

4. Procédé selon l'une quelconque des revendications précédentes, **caractérisé par** les autres étapes de procédé suivantes :
- utilisation d'un capteur d'angle de rotation à au moins 2 axes qui est incliné 2 fois par rapport au vantail.

5. Procédé selon l'une quelconque des revendications précédentes, **caractérisé par** les autres étapes de procédé suivantes :
- utilisation d'un capteur d'angle de rotation à 3 axes.

6. Procédé selon l'une quelconque des revendications précédentes, **caractérisé en ce que**
- l'utilisation d'un capteur gyroscopique sous la forme d'un capteur d'angle de rotation.
